# EUROPÄISCHE PATENTANMELDUNG

(11) **EP 1 126 183 A1**
(43) Veröffentlichungstag der Anmeldung: **22.08.2001**
(21) Anmeldenummer: 01102564.0
(22) Anmeldetag: 06.02.2001
(51) Int. Cl.: F16B 13/00, F16B 13/06

(54) **Dübel mit Innen-und Aussenwalze aus hartem bzw. weichem Material**

(30) Priorität: 16.02.2000 DE 20002801 U
(71) Anmelder: RIWA TEC GmbH, Messgeräte Handelsgesellschaft, 76831 Birkweiler/Pfalz (DE)
(72) Erfinder: Blatt, Hans-Peter, 76833 Frankweiler (DE)
(74) Vertreter: Ratzel, Gerhard, Dr.

(57) **Zusammenfassung**

Die Erfindung betrifft einen Dübel mit Innen-und Aussenwalze, wobei der Dübel aus einer Innenwalze (1) aus hartem Material und einer Aussenwalze (2) aus demgegenüber weichem Material besteht,wobei die Innenwalze in der Weise in die Aussenwalze eingesetzt ist,dass die bauseitig innen angeordneten Grundflächen der beiden Walzen fest miteinander verbunden sind und in der Innenwalze ein Kanal (3) angeordnet ist
Zur Zusammenfassung gehört Figur 4.

## Beschreibung

Die vorliegende Erfindung betrifft einen Dübel, der beispielsweise in Dübel-Löchern, insbesondere Bohrlöchern von Wänden einsetzbar ist, der eine überraschend feste Verankerung, beispielsweise in gemauerten Wänden auch dann ermöglicht, wenn das zu verdübelnde Loch zumindest teilweise Ausmessungen und insbesondere variierende Durchmesser-Dimensionen aufweist, die die Anwendung der herkömmlichen Spreiz-Dübel nicht mehr zulassen. Der erfindungsgemäße Dübel besteht aus einer vorzugsweise pyramidenstumpfartig ausgebildeten Innenwalze aus hartem Material und einer damit einstückig, beispielsweise durch Verschweißung verbundenen Außenhülse aus dehnbarem, d.h. weichem Material.

Die Innenwalze besteht vorzugsweise aus einem harten Kunststoff, insbesondere aus Polyamid, die Außenwalze besteht vorzugsweise aus weichem Kunststoffmaterial, beispielsweise aus weichem Polyethylen oder weichem Gummimaterial.

Das Wesen vorliegender Erfindung ist in den beiliegenden Abbildungen weiterhin erläutert.

In diesen Abbildungen sind bevorzugte Ausführungsformen des Erfindungsgegenstandes dargestellt.
Figur 1 zeigt die pyramidenstumpfförmige Innenwalze aus hartem Material;
Figur 2 zeigt die Außenwalze aus stark dehnbarem weichem Material.
Figur 3 ist ein waagerechter Schnitt durch die Darstellung der Figur 1.
Figur 4 zeigt in Gesamtdarstellung den erfindungsgemäßen Dübel, wobei die Innenwalze, die mit dem Bezugszeichen 1 versehen ist, in die Außenwalze, die das Bezugszeichen 2 trägt, eingesetzt ist. Die kleinere Grundfläche 1a der Innenwalze ist mit der Unterseite 2a der Außenwalze fest verbunden, beispielsweise verklebt oder verschweißt.

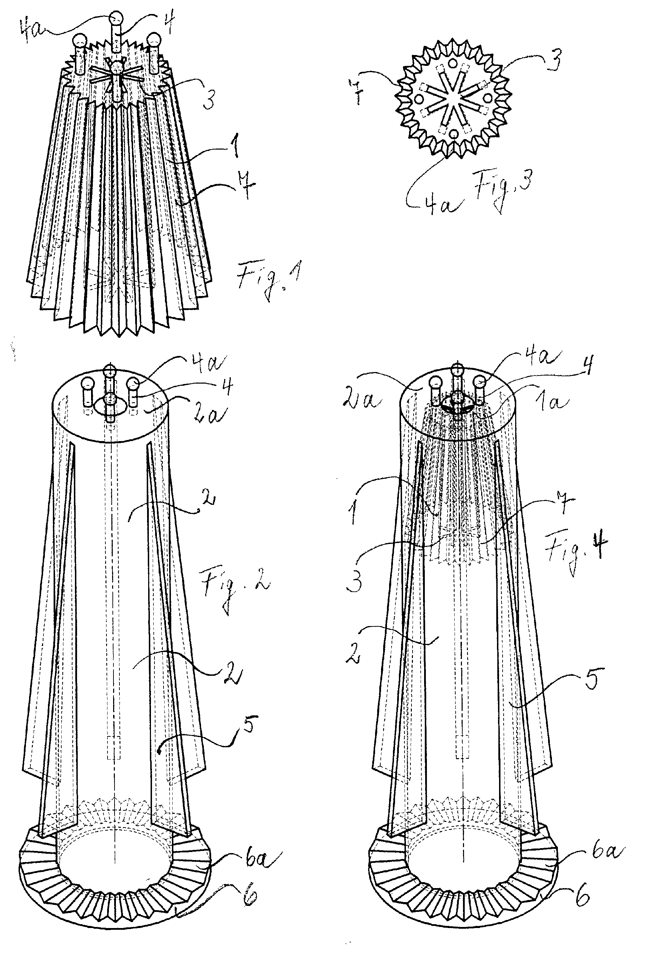

Im folgenden wird weiterhin der Aufbau und die Funktionsweise des erfindungsgemäßen Dübels an Hand der beiliegenden Figuren 1 - 4 im einzelnen erläutert, die eine bevorzugte Ausführungsform zeigen.

Der Dübel gemäß Figur 4 wird in ein beispielsweise um mehrere Millimeterbeträge weiteres Bohrloch im Mauerwerk eingesetzt und sodann eine (nicht gezeichnete) Dübelschraube sternförmigen Kanal (= Sternkanal), der das Bezugszeichen 3 trägt und in der harten Innenwalze 1 in der Weise angeordnet ist, dass er die beiden Stirnflächen der Innenwalze 1 verbindet, in der Weise eingeschraubt, dass sich im Sternkanal ein Schraubengang bildet. Das Material der Dübelschraube ist also noch härter als das Material, aus dem die Innenwalze besteht, so dass sich die Dübelschraube in den Sternkanal unter Entstehung von Schraubengängen einschrauben kann.

Der Schraubvorgang, d.h. die Entstehung dieses Schraubengangs, ist beendet, sobald die Dübelschraube den Endbereich des Sternkanals erreicht hat.

Um zu bewirken, dass eine Relativ-Verdrehung der Innenwalze zur Außenwalze unterbunden bleibt, sind nach einer bevorzugten Ausführungsform an der Oberfläche der Innenwalze mit kleinerem Durchmesser (Bezugszeichen 2a) Stifte 4 mit Köpfen 4a angeordnet, die durch entsprechende Bohrungen der Oberfläche 2 a der Außenwalze hindurchragen.

Um nun den erwünschten sehr festen Halt des erfindungsgemäßen Dübels im Mauerloch oder in einem sonstigen Dübelloch zu bewirken, wird die Dübelschraube weiter gedreht mit folgendem Ergebnis: Die Innenwalze führt in der Außenwalze eine Art Rückwärtsbewegung durch und zwingt durch ihre Drehbewegung die flexible, weiche und vorzugsweise "aufblähbare" Außenwalze unter gleichzeitiger Verkürzung zu einer bedeutenden Querschnittsvergrößerung, wodurch automatisch ein Ausfüllen des gegebenenfalls weiteren Dübellochs und mithin ein sehr fester Sitz der Außenwalze im Dübelloch erzielt wird.

Nach einer bevorzugten Ausführungsform weist die Außenwalze Rippenelemente 5 aus weichem Material auf.

Nach einer weiteren Ausführungsform weist die Außenwalze eine Abschlußplatte 6 auf, die an ihrer Oberfläche eine Riffelung 6a besitzt, in die der untere Endbereich der Rippenelemente 5 eingesetzt sind.

Nach einer weiteren bevorzugten Ausführungsform ist die Außenfläche der pyramidenstumpfförmigen Innenwalze mit einer scharfen Rillung 7 versehen, die den oben geschilderten Stauchvorgang der Außenwalze begünstigt.

Die nach einer bevorzugten Ausführungsform geriffelte Mantelfläche der Innenwalze bewirkt bei der Rückwärtsbewegung der Innenwalze in der Außenwalze eine Erhöhung des Kraftschlusses und damit eine Verstärkung des oben beschriebenen "Bläheffekts" der Außenwalze.

## Patentansprüche

1. Dübel mit Innen- und Außenwalze,
dadurch gekennzeichnet,
dass der Dübel aus einer Innenwalze (1) aus hartem Material und einer Außenwalze (2) aus demgegenüber weichem Material besteht, wobei die Innenwalze (1) in der Weise in die Außenwalze (2) eingesetzt ist, dass die bauseitig innen angeordneten Grundflächen der beiden Walzen fest miteinander verbunden sind und in der Innenwalze (1) ein Kanal (3) angeordnet ist.

2. Dübel nach Anspruch 1,
dadurch gekennzeichnet,
dass die Innenwalze (1) pyramidenstumpfartig ausgebildet ist.

3. Dübel nach Anspruch 1 - 2,
dadurch gekennzeichnet,
dass auf der bauseitig innen angeordneten Grundfläche der Innenwalze Stifte (4) angeordnet sind, die durch entsprechende Bohrungen der Deckfläche der Außenwalze (2) hindurchragen.

4. Dübel nach Anspruch 3,
dadurch gekennzeichnet,
dass die Stifte (4) mit Kugelköpfen (4a) ausgestattet sind.

5. Dübel nach Anspruch 1 - 4,
dadurch gekennzeichnet,
dass die Außenwalze (2) mit Rippenelementen (5) ausgestattet ist, die bezüglich ihrer bauseitig außen liegenden rechteckigen Grundfläche mit Rillungen (6a) und einer Abdeckplatte (6) zusammenarbeiten.

6. Dübel nach Anspruch 1-5,
dadurch gekennzeichnet, dass der Kanal 3 ein Sternkanal ist
